# DEMANDE DE BREVET EUROPEEN

(11) **EP 0 915 308 A1**
(43) Date de publication de la demande: **12.05.1999**
(21) Numéro de dépôt: 98120656.8
(22) Date de dépôt: 04.11.1998
(51) Int. Cl.: F25B 39/04, B60H 1/32

(54) **Condenseur de climatisation muni d'un réservoir de fluide interchangeable**

(30) Priorité: 05.11.1997 FR 9713919
(71) Demandeur: VALEO THERMIQUE MOTEUR, 78321 La Verrière (FR)
(72) Inventeur: Dabrowski, Laurent, 78000 Versailles (FR)
(74) Mandataire: Gamonal, Didier

(57) **Abrégé**

Le réservoir est vissé axialement dans une embase (30), elle-même brasée sur une boîte collectrice du condenseur. Il communique avec celle-ci par des conduites (41, 42) ménagées dans l'embase.

Application à la climatisation de l'habitacle du véhicules automobiles.

## Description

L'invention concerne un condenseur, notamment pour un fluide réfrigérant dans un dispositif de climatisation de l'habitacle d'un véhicule automobile, comprenant une boîte collectrice et un réservoir intermédiaire allongé pour le traitement et/ou l'accumulation d'un fluide, relié à la boîte collectrice par des conduites de liaison.

Dans un tel condenseur, comme il est bien connu, le réservoir intermédiaire peut remplir tout ou partie des fonctions suivantes: filtration et/ou déshydratation du fluide réfrigérant, compensation des variations de volume de celui-ci, séparation des phases liquide et gazeuse. Sa position intermédiaire par rapport au condenseur permet de ne faire circuler dans la partie de celui-ci située en aval du réservoir que du fluide à l'état liquide, qui est ainsi sous-refroidi au dessous de la température d'équilibre liquide/gaz, améliorant les performances du condenseur et rendant celles-ci relativement indépendantes de la quantité de fluide contenue dans le circuit.

EP-A-0 480 330 décrit, dans un condenseur de climatisation de véhicule, un réservoir intermédiaire qui se fixe de manière amovible sur une embase solidaire de la boîte collectrice, traversée par les deux conduites de liaison.

Ce réservoir est muni à son extrémité inférieure d'une tête solidaire de sa paroi, qui est fixée sur l'embase au moyen d'une vis. Les conduites de liaison s'étendent pour partie dans l'embase et pour partie dans la tête du réservoir.

Cette réalisation connue est relativement complexe et encombrante. De plus, pour remplacer le réservoir, il faut dévisser la vis de fixation, ce qui peut comporter de sérieuses difficultés en fonction de l'accessibilité dans le véhicule.

L'invention vise notamment un condenseur comprenant une boîte collectrice et un réservoir intermédiaire allongé pour le traitement et/ou l'accumulation d'un fluide, qui se fixe de manière amovible sur une embase solidaire de la boîte collectrice, traversée par deux conduites de liaison pour le transfert du fluide entre la boîte collectrice et le réservoir.

Selon l'invention, le réservoir est muni au voisinage d'une première de ses extrémités d'un filetage axial qui coopère pour sa fixation avec l'embase, lesdites conduites de liaison s'étendant dans celle-ci jusau'en regard de ladite première extrémité.

Des caractéristiques optionnelles de l'invention, complémentaires ou alternatives, sont énoncées ci-après:
- La boîte collectrice est allongée côte à côte avec le réservoir et le réservoir est relié à la boîte collectrice par une bride de maintien au voisinage de sa seconde extrémité.
- Le réservoir présente une tubulure axiale de passage de fluide qui fait saillie à sa première extrémité pour se raccorder à l'intérieur de l'embase à une première desdites conduites de liaison.
- Le réservoir présente à sa première extrémité des ouvertures de passage de fluide entourant ladite tubulure axiale et communiquant avec la seconde desdites conduites de liaison.
- La première conduite s'étend sensiblement perpendiculairement à la direction longitudinale du réservoir.
- La seconde conduite est oblique par rapport à la direction longitudinale du réservoir, et s'éloigne de la première conduite en direction de la boîte collectrice.
- Les première et seconde conduites sont disposées respectivement en aval et en amont du réservoir.
- Le réservoir comporte une cloison transversale perméable au fluide, délimitant entre elle et la seconde extrémité un volume d'accumulation de fluide à l'abri des turbulences produites par la circulation de celui-ci.
- L'embase est brasée sur la face externe d'une paroi tubulaire délimitant la boîte collectrice.
- Les conduites de liaison s'étendent sensiblement tangentiellement par rapport à ladite paroi tubulaire et débouchent latéralement à travers celle-ci.

Les caractéristiques et avantages de l'invention seront exposés plus en détail dans la description ci-après, en se référant aux dessins annexés, sur lesquels:
- la figure 1 est une vue de face d'un condenseur selon l'invention;
- la figure 2 est une vue de dessus de ce condenseur;
- la figure 3 est un schéma d'un circuit de fluide réfrigérant incorporant le condenseur;
- la figure 4 est une vue en perspective de l'embase du condenseur des figures 1 et 2;
- la figure 5 est une vue en coupe médiane de l'embase;
- la figure 6 est une vue en coupe axiale du réservoir; et
- la figure 7 est une vue analogue à la figure 6, relative à une variante du réservoir et montrant en outre l'embase.

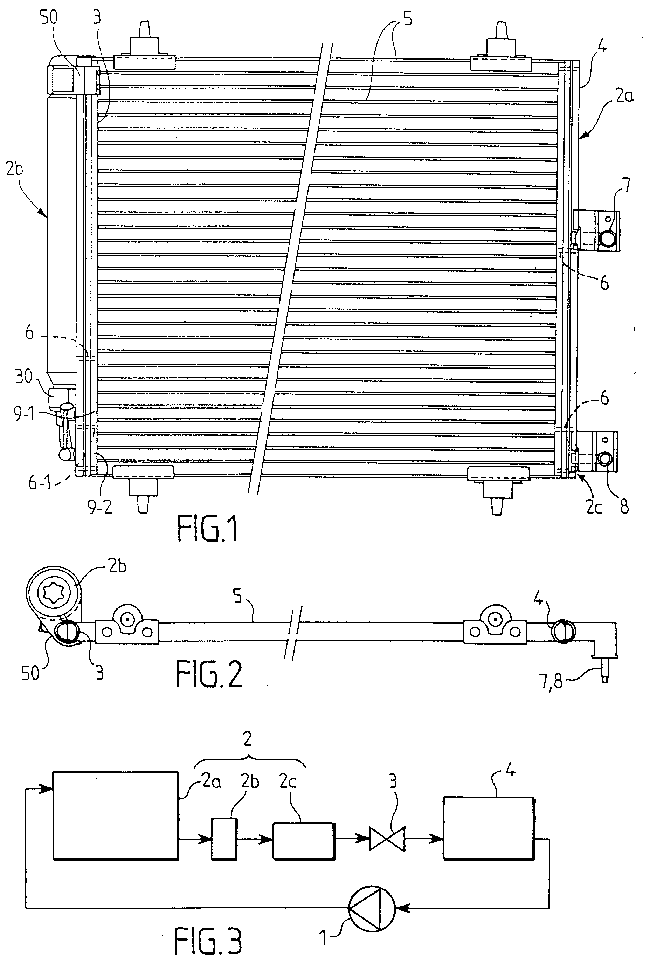

La figure 3 est un schéma d'un circuit de fluide réfrigérant faisant partie d'un dispositif de climatisation de l'habitacle d'un véhicule automobile. De manière connue, ce circuit comprend successivement un compresseur 1, un ensemble 2 désigné ci-après sous le nom de condenseur, un détendeur 3 et un évaporateur 4. Le condenseur 2 comporte une section amont 2a dans laquelle le fluide réfrigérant cède de la chaleur à un flux d'air de manière à se condenser, après avoir été le cas échéant "désurchauffé" à partir d'une température d'entrée supérieure à la température d'équilibre liquide/gaz. La section 2a est suivie d'un réservoir intermédiaire 2b, puis d'une section aval 2c dans laquelle le fluide est sous-refroidi par échange de chaleur avec le flux d'air.

Un exemple de réalisation du condenseur 2 est montré dans sa structure générale sur les figures 1 et 2. Il comprend deux boîtes collectrices 3,4 allongées verticalement et écartées l'une de l'autre dans une direction horizontale, reliées entre elles par une multiplicité de tubes de circulation de fluide horizontaux 5. Chaque boîte collectrice est divisée en différentes chambres par des cloisons horizontales 6 de manière que le fluide circule, dans les tubes 5, alternativement d'une chambre de la boîte 3 à une chambre de la boîte 4 et inversement, depuis la chambre supérieure de la boîte 4, qui communique avec une tubulure d'entrée 7, jusqu'à la chambre inférieure de la même boîte 4, qui communique avec une tubulure de sortie 8.

L'une des cloisons intermédiaires de la boîte collectrice 3, désignée par la référence 6-1, sépare l'une de l'autre des chambres 9-1 et 9-2, situées respectivement au-dessus et au-dessous de la cloison 6-1, et qui communiquent entre elles exclusivement par l'intermédiaire du réservoir 2b, lequel est allongé verticalement et s'étend le long de la boîte 3.

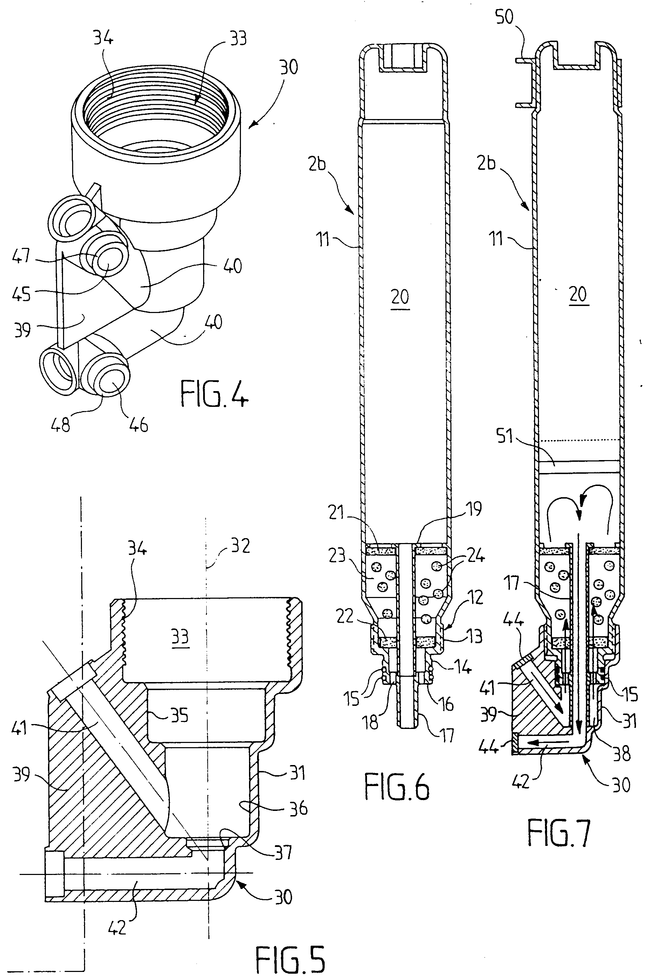

Comme on le voit plus particulièrement sur les figures 6 et 7, le réservoir 2b comprend un boîtier formé d'un corps cylindrique 11 occupant la majeure partie de sa hauteur, et d'un col rétréci 12 disposé à sa partie inférieure. Le col 12 présente à son tour une région 13 munie d'un filetage mâle et, au dessous de cette région filetée, une région 14 de plus petit diamètre, creusée de deux gorges circonférentielles pour le logement de deux joints toriques d'étanchéité 15. À son extrémité inférieure, le réservoir 2b présente une paroi transversale d'extrémité 16 traversée d'une part par une tubulure axiale 17 qui fait saillie vers le haut à l'intérieur du réservoir et vers le bas à l'extérieur de celui-ci, d'autre part par des ouvertures 18 entourant la tubulure 17. La tubulure 17 s'étend vers le haut jusqu'à une cloison intermédiaire perforée 19, qu'elle traverse pour déboucher dans un volume libre 20 compris entre la cloison 19 et l'extrémité supérieure du réservoir et s'étendant sur la majeure partie de la hauteur de celui-ci. Deux rondelles perméables au fluide 21, 22, entourant la tubulure 17 et s'appuyant respectivement vers le haut sur la cloison 19 et vers le bas sur un épaulement reliant les régions 13 et 14, délimitent entre elles un volume annulaire de traitement 23 garni de particules 24 propres à filtrer et/ou déshydrater le fluide.

Le réservoir 2b est en liaison mécanique et de communication de fluide avec la boîte collectrice 3 par l'intermédiaire d'une embase 30 qui est représentée en détail sur les figures 4 et 5. Cette embase est de préférence une pièce moulée en alliage d'aluminium, définissant une paroi 31 sensiblement de révolution autour d'un axe vertical 32, qui délimite un logement 33 ouvert vers le haut pour le col du réservoir 2b. La surface latérale du logement 33 présente dans une région supérieure un filetage femelle 34 coopérant avec le filetage 13 du réservoir. Une région médiane cylindrique 35 coopère avec les joints d'étanchéité 15, et une région inférieure cylindrique 36 entoure la tubulure 17 et délimite avec celle-ci, dont l'extrémité libre s'appuie sur un siège 37 prévu au fond du logement 33, un espace annulaire 38.

À la paroi 31 se raccorde un voile 39 s'étendant sensiblement selon un plan passant par l'axe 32. Ce voile présente, de part et d'autre de ce plan, des renflements 40 qui permettent de loger deux conduites 41, 42 allongées parallèlement à ce plan. Dans une étape intermédiaire de la fabrication de l'embase, comme le montre la figure 5, la conduite 41 débouche par ses deux extrémités respectivement dans le logement 33, au niveau de l'espace annulaire 38, et dans le bord libre du voile 39, et est inclinée vers le haut de l'une vers l'autre. La conduite 42 s'étend horizontalement depuis le bord libre du voile jusqu'au dessous du logement 33, où elle forme un coude vers le haut pour déboucher au fond de celui-ci, à l'intérieur du siège annulaire 37. Dans l'embase terminée, des bouchons brasés 43, 44, montrés sur la figure 7, obturent de manière étanche les extrémités libres des conduites 41, 42 et celles-ci débouchent à l'extérieur exclusivement par des passages 45, 46 ménagés dans des bossages latéraux 47, 48 formés sur les renflements 40.

L'embase 30 est fixée sur la boîte collectrice 3 par brasage des extrémités des bossages 47, 48 sur la face extérieure de la paroi tubulaire en tôle d'aluminium de la boîte, lors de l'assemblage du condenseur par brasage. Les passages 45 et 46 communiquent avec les chambres 9-1 et 9-2 respectivement de la boîte à fluide par des trous prévus dans la paroi tubulaire. Le fluide condensé parvenant dans la chambre 9-1 passe de celle-ci à l'espace annulaire 38 par le passage 45 et la conduite inclinée 41, puis pénètre dans le réservoir 2b, vissé dans l'embase, par les ouvertures 18. Il traverse alors le volume 23 où il est desséché et filtré par les particules 24, et s'accumule dans le volume 20, où la phase gazeuse résiduelle éventuelle se rassemble à la partie supérieure. Le fluide quitte le volume 20, exclusivement à l'état liquide, par la tubulure 17, et atteint la chambre 9-2 de la boîte collectrice 3 par la conduite horizontale 42 et le passage 46. Ainsi, les tubes 5 et les chambres des boîtes 3 et 4 situés plus haut que la cloison 6-1, y compris la chambre 9-1, constituent la section amont 2a du condenseur, tandis que les tubes et les chambres situés plus bas que cette cloison, y compris la chambre 9-2, constituent la section aval 2c.

Une bride de maintien 50 relie mécaniquement l'extrémité supérieure du réservoir 2b à celle de la boîte collectrice 3 pour une fixation plus stable du réservoir.

Sur la figure 7 est représentée une cloison facultative 51 s'étendant en travers du volume 20, à faible distance au dessus de la cloison 19. La cloison 51 est perméable au fluide et met à l'abri des turbulences la région supérieure du volume 20, facilitant la séparation du gaz/liquide.

Le remplacement du réservoir est particulièrement simple, puisqu'il suffit de dévisser l'ancien réservoir et de visser le nouveau.

## Revendications

1. Condenseur (2), notamment pour un fluide réfrigérant dans un dispositif de climatisation de l'habitacle d'un véhicule automobile, comprenant une boîte collectrice (3) et un réservoir intermédiaire allongé (2b) pour le traitement et/ou l'accumulation d'un fluide, qui se fixe de manière amovible sur une embase (30) solidaire de la boîte collectrice, traversée par deux conduites de liaison (41, 42) pour le transfert du fluide entre la boîte collectrice et le réservoir, caractérisé en ce que le réservoir est muni au voisinage d'une première (16) de ses extrémités d'un filetage axial (13) qui coopère pour sa fixation avec l'embase, lesdites conduites de liaison s'étendant dans celle-ci jusqu'en regard de ladite première extrémité.

2. Condenseur selon la revendication 1, caractérisé en ce que la boîte collectrice est allongée côte à côte avec le réservoir et que le réservoir est relié à la boîte collectrice par une bride de maintien (50) au voisinage de sa seconde extrémité.

3. Condenseur selon l'une des revendications 1 et 2, caractérisé en ce que le réservoir présente une tubulure axiale (17) de passage de fluide qui fait saillie à sa première extrémité (16) pour se raccorder à l'intérieur de l'embase à une première (42) desdites conduites de liaison.

4. Condenseur selon la revendication 3, caractérisé en ce que le réservoir présente à sa première extrémité (16) des ouvertures (18) de passage de fluide entourant ladite tubulure axiale et communiquant avec la seconde (41) desdites conduites de liaison.

5. Condenseur selon l'une des revendications 3 et 4, caractérisé en ce que la première conduite (42) s'étend sensiblement perpendiculairement à la direction longitudinale du réservoir.

6. Condenseur selon l'une des revendications 3 à 5, caractérisé en ce que la seconde conduite (41) est oblique par rapport à la direction longitudinale du réservoir, et s'éloigne de la première conduite en direction de la boîte collectrice.

7. Condenseur selon l'une des revendications 3 à 6, caractérisé en ce que les première et seconde conduites sont disposées respectivement en aval et en amont du réservoir.

8. Condenseur selon l'une des revendications précédentes, caractérisé en ce que le réservoir comporte une cloison transversale (51) perméable au fluide, délimitant entre elle et la seconde extrémité un volume d'accumulation de fluide à l'abri des turbulences produites par la circulation de celui-ci.

9. Condenseur selon l'une des revendications précédentes, caractérisé en ce que l'embase est brasée sur la face externe d'une paroi tubulaire délimitant la boîte collectrice.

10. Condenseur selon la revendication 9, caractérisé en ce que les conduites de liaison s'étendent sensiblement tangentiellement par rapport à ladite paroi tubulaire et débouchent latéralement à travers celle-ci.
